# EUROPEAN PATENT APPLICATION

(11) **EP 3 591 792 A1**
(43) Date of publication of application: **08.01.2020**
(21) Application number: 18461573.0
(22) Date of filing: 04.07.2018
(51) Int. Cl.: H02J 7/00

(54) **A SYSTEM AND A METHOD FOR OPERATING A POWER STRIP**

(71) Applicant: Batterypal Sp. z o.o., 30-056 Krakow (PL)
(72) Inventor: Saeby, Thorvald, 1593 Svinndal (NO); Szprynger, Michal, 55-300 Szczepanow (PL); Latacz, Michal, 31-082 Krakow (PL)
(74) Representative: Kancelaria Eupatent.pl Sp. z.o.o

(57) **Abstract**

A method for charging a battery powered electronic device (101A-C), the method comprising the steps of detecting that the battery powered electronic device is being charged; when the battery powered electronic device is being charged, obtaining a first list of addresses (302) comprising references to sockets (102A-C) that have already been verified by the battery powered electronic device; obtaining a second list of available addresses of sockets ready for connection using said a wireless communication (303); removing addresses of the first list from the addresses of the second list (304) in order to obtain a list of candidate addresses for connection; selecting a candidate address (305), from the second list, and connecting (306) to the respective socket in order to execute an association process between the connected socket and the battery powered electronic device wherein a decision on association is made based on observing a response of the connected socket to a pattern test requesting certain behavior of the connected socket being verifiable by the battery powered electronic device; when said response, that matches said pattern test, is detected, continuing charging (307) the battery powered electronic device until a predefined charging condition is met.

## Description

### TECHNICAL FIELD

The present invention relates to a system and a method for operating a power strip. In particular the present invention relates to charging mobile devices using a special system and method for operating a power strip.

### BACKGROUND OF THE INVENTION

Prior art defines a so called Battery Care Function utilized when mobile devices are being charged. This is due to the fact that different types of batteries need different charging conditions. For example, in order to achieve a best lifetime of a battery, it is recommended to charge the battery only when its power level has decreased below a given level and/or similarly to stop charging when power level has reached a predetermined level. Typically, during discharging of the battery the minimum state of charge level is in a range from 10 to 20% and during charging of the battery the maximum state of charge level is preferably in a range from 80 to 90% of a fully charged level. In this manner, battery degradation can be slowed down by limiting battery charge/discharge levels.

A US patent application US20160006274A1, titled "Managing Battery Charge to Prolong Battery Life" discloses that a level of battery discharge is close to minimal or is the lowest at a platform voltage Vplat, which for the presented exemplary battery is about 3.8V. In the present example embodiment, setting the top charge voltage Vtop to 3.92V establishes a top charge at 70 percent of battery capacity, and setting the discharge end voltage Vlow to 3.74V results in discharge being halted at 20% of the battery capacity.

Thus, it sets a preferred battery operating range between 20 and 70 percent of its capacity.

Currently, systems or mobile devices commonly used by customers are typically not equipped with any control of battery degradation nor support for maintaining charging levels suggested by their manufacturers in order to obtain the best battery life.

Thus, it would be advantageous to develop a system and method for operating a power strip that would implement a battery care function at the level of the charger used for charging many different devices instead of implementing such function at the level of mobile devices. Further, such charger is advantageously in communication with a mobile device being charged and may be controlled therefrom. Thus, said power strip and a mobile device form a complete system according to the present invention.

The aim of the development of the present invention is an improved system and method for operating a power strip comprising at least one socket and typically comprising multiple sockets.

### SUMMARY

The object of the invention is a method for charging a battery powered electronic device, the method comprising the steps of detecting that the battery powered electronic device is being charged; wherein the method is characterized in that it comprises the steps of: when the battery powered electronic device is being charged, obtaining a first list of addresses comprising references to sockets that have already been verified by the battery powered electronic device; obtaining a second list of available addresses of sockets ready for connection using said a wireless communication; removing addresses of the first list from the addresses of the second list in order to obtain a list of candidate addresses for connection; selecting a candidate address, from the second list, and connecting to the respective socket in order to execute an association process between the connected socket and the battery powered electronic device wherein a decision on association is made based on observing a response of the connected socket to a pattern test requesting certain behavior of the connected socket being verifiable by the battery powered electronic device; when said response, that matches said pattern test, is detected, continuing charging the battery powered electronic device until a predefined charging condition is met.

Preferably, the method further comprises executing sorting of the list of candidate addresses for connections according to wireless signal parameters.

Preferably, said wireless signal parameters are selected from a group comprising: a signal to noise ratio, a bit error rate.

Preferably, said pattern test comprises a selective series of power supply on/off cycles.

Preferably, said predefined charging condition is charging pause or charging stop.

Preferably, when said response, that matches said pattern test, is not detected: disconnecting from the current candidate address; adding the current candidate address to the first list; and returning to the step of obtaining a first list of addresses.

The object of the invention is also a computer program comprising program code means for performing all the steps of the computer-implemented method as described above when said program is run on a computer, as well as a computer readable medium storing computer-executable instructions performing all the steps of the computer-implemented method as described above when executed on a computer.

The object of the invention is also a method of operation of a power strip configured to charge a battery powered electronic device, the method being characterized by: assigning a wireless communication address to each socket of the power strip; allowing discovery of said socket by the electronic device and waiting for a request for connection from the electronic device to said socket; receiving the request for connection from the electronic device to said socket and establishing the connection; waiting for and receiving an association sequence from said connected mobile device for the respective socket; in response to the received association sequence, controlling the respective socket; when the association is successful, continuing the charging process until a predefined charging stop condition.

Preferably, the establishment of connection means that the respective socket is temporarily associated to the connected electronic device and the power strip temporarily disallows discovery of said provisionally associated socket by other mobile devices.

Preferably, the predefined charging condition is charging pause or charging stop.

Preferably, the method further comprises checking if the condition in the stop charging step is fulfilled and if so, releasing the address of this socket and making its address available for discovery by other mobile devices.

The object of the invention is also a power strip comprising: at least one socket selectively powered by electric energy from a power source; memory for storing operational data as well as configuration data of the power strip; a controller configured to control power supply as well as to control wireless communication with at least one electronic device; characterized in that the controller is configured to perform all the steps of the method as described above.

The object of the invention is also a system for charging a battery power electronic device characterized in that it comprises: at least one electronic device configured to perform all the steps of the method as described above; at least one power strip as described above.

### BRIEF DESCRIPTION OF THE DRAWINGS

These and other objects of the invention presented herein, are accomplished by providing a system and a method for operating a power strip. Further details and features of the present invention, its nature and various advantages will become more apparent from the following detailed description of the preferred embodiments shown in a drawing, in which:
Fig. 1 presents a diagram of a system according to the present invention;
Fig. 2 presents a diagram of the method performed by the system according to the present invention;
Fig. 3 presents a diagram depicting operation of a mobile device;
Figs. 4 and 5 present examples of a graphical user interface on a mobile device;
Fig. 6 presents a diagram depicting operation of a power strip;
Fig. 7 presents devices addressing using a given address pool;
Fig. 8 presents an example of the system operation in case of termination during charging;
Fig. 9 presents an example of the system operation in case of termination during discharging.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DETAILED DESCRIPTION

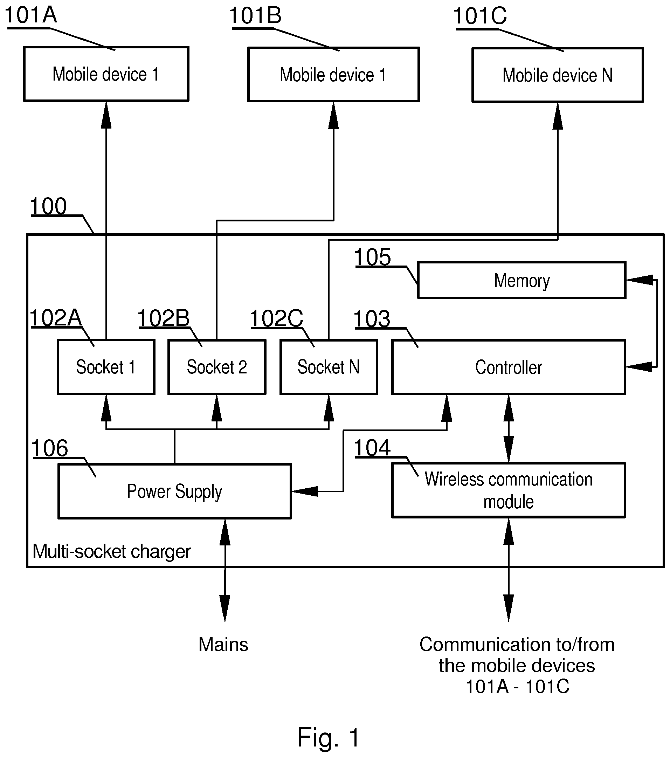

Fig. 1 presents a diagram of the system according to the present invention. The system has a form of a power strip comprising at least one socket (102A-C) selectively supplied with power from a power supply (106), which in turn is supplied with power from the mains. The power strip (100) may have a form of a multi-socket charger. Typical multi-socket chargers available on the market, usually comprise up to six sockets (102A-C) while three or six sockets arrangements are most popular.

The system may be realized using dedicated components or custom made FPGA or ASIC circuits. The system comprises a memory (105) for storing operational data as well as configuration data. Also different pieces of software may be stored in the memory (105) such as firmware of a controller (103). Additionally, the controller (103) is configured to control power supply of different sockets (102A-C) as well as to control wireless communication (104) with one or more mobile devices (101A-C) being charged.

The mobile device (101A-C) is a general term for any type of battery powered electronic device such as a notebook and in particular a handheld computer such as a smartphone or a tablet or a GPS navigation device.

The memory (105) may also store computer program or programs executed by the controller (103) in order to execute steps of the method according to the present invention.

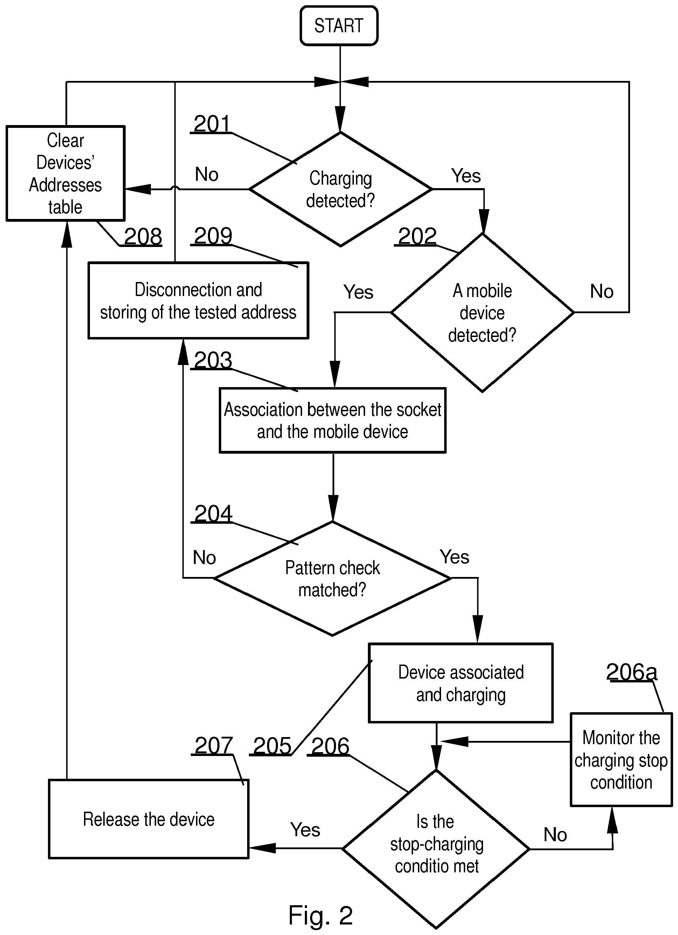

Fig. 2 presents a diagram of the method performed by the system according to the present invention. The system comprises the power strip (100) and the mobile device (101A-C). The method starts in step (201) from verifying whether a charging process is detected in a previously unused socket (102A-C). To this end detectors of load, known from the prior art, may be employed that report the state of the sockets to the controller (103) of the power strip (100). If the charging process is not detected, the method exits to step (208) where a table with mobile device addresses (so-called black list of the candidate sockets (102A-C)) is cleared, for example all MAC addresses are deleted.

Otherwise, when the charging has been detected, the method initiates wireless communication (104) and allows discovery of the socket (102A-C) for which load has been detected. Data allowing discovery will typically comprise a MAC address and for example optionally a name of a device such as a power strip name and a socket name.

Next, the method proceeds to step (202) where it is verified whether the mobile device (101A-C) has been detected. To this end, the system may use any wireless communication (104) means such as a Bluetooth communication.

At this time there exists the provisionally paired socket (102A-C) with the mobile device (101A-C). The provisional pairing preferably also means that another mobile device (101A-C) cannot be paired with this particular socket (102A-C) and its address cannot be discovered by other mobile devices (101A-C) until the currently, provisionally paired mobile device (101A-C) releases its pairing with this socket (102A-C).

In case the mobile device (101A-C) is not detected, the process returns to the first step. This means that the detected load does not correspond to the mobile device (101A-C).

In other words the power strip (100) does not detect mobile devices but rather detects a presence of load on a given socket and after that it allows discovery of such socket. In turn a mobile device being charged is responsible for pairing and communication.

Otherwise, in case of detection of the device in step (202), the process proceeds to step (203) where an association between the socket (102A-C) and the mobile device (101A-C) is made. In order to make sure that the given mobile device (101A-C) is in control of the right socket (102A-C), it connects as a client to the available sockets (102A-C) of the appropriate power strip (100).

First of all, the mobile device (101A-C), preferably selects the power strip (or otherwise available sockets (102A-C)) having the strongest wireless signal level. Furthermore, it is possible that a given power strip (100) has more than one socket (102A-C) available for associating/pairing. In order to execute an association process between the socket (102A-C) and the mobile device (101A-C), the mobile device (101A-C) sequentially connects to each of the available sockets (102A-C) and runs a pairing process in order to determine which particular socket (102A-C) it is connected to.

The pairing process is aimed at simplifying a use of the system so that a user does not have to manually select one of the available sockets in an application of the mobile device (100A-C). Therefore, the system is automatic and simple to use.

This pairing is preferably executed by running a pattern test using a given socket (102A-C). Such pattern may comprise a selective series of power supply on/off cycles executed for the particular socket (102A-C). Thus, before such pairing (or otherwise keying) a newly connected mobile device (101A-C) is not aware, which socket (102A-C) it is connected to. In order to be able to effectively control the socket (102A-C), it must establish the connection to this particular socket (102A-C).

By observing whether said selective series of power supply on/off cycles match (204) an input sequence, the device may establish that the presently controlled socket (102A-C) is the socket (102A-C) it is connected to. This process is called association between the socket (102A-C) and the mobile device (101A-C).

An example of a pairing cycle may comprise switching the power supply of the socket (102A-C) on for 5 seconds, switching it off for 2 seconds or may comprise similar sequences.

To this end, the mobile device (101A-C), after initial pairing via said wireless connection (104), is configured to execute the defined, arbitrary pairing cycles of a given (provisionally paired) socket (102A-C) in order to determine its proper association.

In general, a decision on association between the socket (102A-C) and the mobile device (101A-C) is made based on observation performed by the mobile device (101A-C). The respective mobile device (101A-C) verifies if the connected socket (102A-C) reacts in a proper way to the given pattern test.

When such pattern of a pairing cycle is not confirmed (i.e. the response to the input pattern test is different than expected), in step (209) this address is released and the mobile device (101A-C) returns to testing of another available device (socket (102A-C)) for association. The mobile device (101A-C) keeps a record of already tested devices in order not to repeat such tests (the so-called black list).

When such pattern test of a pairing cycle is confirmed, the mobile device (101A-C) becomes associated with the given socket (102A-C) and charging may continue until a stop charging condition is met. Such condition (206) may be a disconnection (unpairing or a connection loss) of the mobile device (101A-C) from the wireless connection (104) or its disconnection form the charger/socket. Herein a physical disconnection from the socket is meant, which results in removal of the respective load from the given socket and removal of the respective pairing between the socket and the mobile device (101A-C).

The stop charging condition may be different from a pause charging condition as explained in the remaining part of the specification. Such conditions are in general called predefined charging conditions.

When the stop-charging condition is met, the device is released from the system i.e. it is disconnected (207).

When the stop-charging condition is not met, the process optionally moves to step (206a) wherein the charging pause condition is monitored. As will be explained further in the description, during charging, the mobile device (101A-C) may send a request to the controller (103) of the power strip (100), for temporary pausing the charging and later for continuing the charging process.

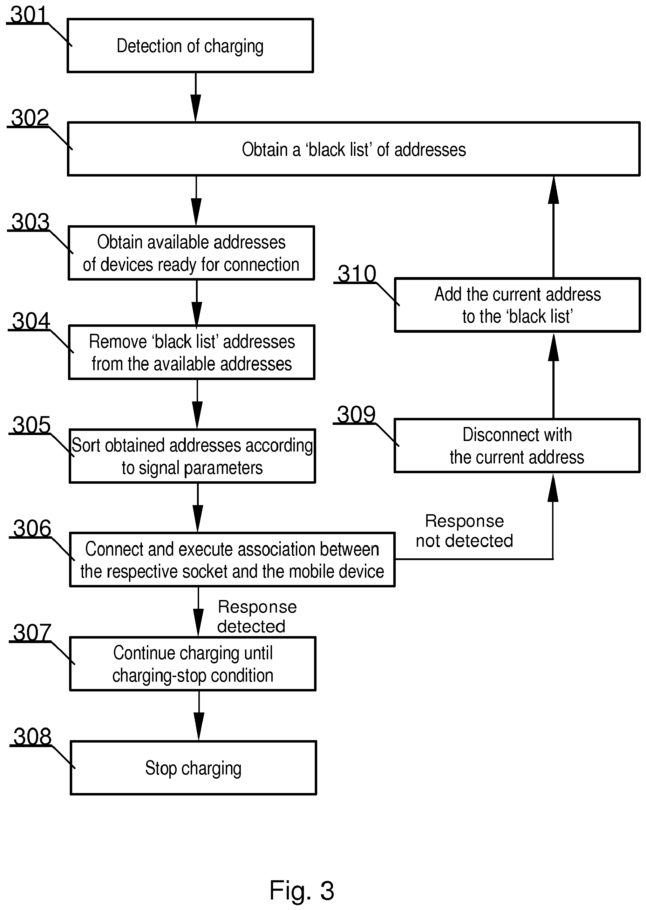

Fig. 3 presents a diagram depicting operation of a mobile device (101A-C) with respect to battery charging. The first step of the method is to detect that the respective mobile device (101A-C) is being charged (301) i.e. if it is supplied with external power.

If it is, the mobile device (101A-C) obtains a 'black list' address (302) (also referred to as the first list). This list is typically stored internally and comprises references to devices that have already been verified, by the mobile device (101A-C), as irrelevant for the purpose of the currently executed charging operation. Therefore, when initially executing this step, the 'black list' of addresses is empty.

Subsequently, in step (303), available addresses of devices ready for connection are obtained (also referred to as the second list). The devices (sockets (102A-C)), ready for connection using said wireless communication (104), will report themselves for discovery by other devices. This is a typical feature of wireless communication (104) methods.

Typically, there will be a plurality of devices, mainly because each socket (102A-C) of the power strip according to the present invention is preferably identified with a distinct address.

When, the list of available addresses of the devices (sockets (102A-C)) ready for connection comprises at least one address, then in step (304) the method removes addresses of step (302) from the addresses of step (303) in order to obtain a list of candidate addresses for connection.

In step (305), the mobile device (101A-C) sorts the obtained (in step (304)) addresses according to the wireless signal parameters. This is considered optional but will typically result in quicker pairing (i.e. the mobile device will find the respective socket quicker). The signal parameters depend on the wireless communication medium (104) and may include parameters such as signal strength, signal to noise ratio, bit error rate or the like.

In case the optional sorting, according to the wireless signal parameters, is not implemented, the mobile device (101A-C) may process the available devices randomly or according to an arbitrary list.

Subsequently, in step (306), the mobile device (101A-C) selects the best candidate according to the sorted (in case of sorting; while any (arbitrary) candidate may be selected in case sorting is not applied) list and connects to the respective device (socket (102A-C)) in order to execute an association process between the respective socket (102A-C), of the power strip, and the mobile device (101A-C). This association process may require said selective series of power supply on/off cycles as explained with reference to Fig. 2.

Next, when a response is detected that matches said selective series used, the mobile device (101A-C) continues charging until a charging-stop condition is met (307).

According to the remaining part of the specification, the condition to stop charging (307) may be different than the condition to pause charging. Such conditions are generally called as predefined charging conditions. Therefore, the condition (307) may be in general called as the predefined charging condition and may both control the stop charging and the pause charging operation (as defined in details in the further part of the specification).

When such condition is detected, the mobile device (101A-C) stops charging (308). This may be effected by sending appropriate instructions to the controller (103) which cause controlling the respective socket (102A-C) of the power strip (100) and disconnecting the device from the socket (102A-C).

Otherwise, when the response, that matches said selective series used by the mobile device (101A-C), is not detected, then the method proceeds to step (309) and disconnects from the current address. This may mean that the tested socket (102A-C) does not match the socket (102A-C) to which the mobile device (101A-C) is connected or that the device associated with said selected address is not a device compliant with the present method of charging. If this is the case then in step (310) the mobile device (101A-C) adds the current address to the 'black list' and returns to step (302) in order to investigate a possibility of testing another available device.

In other case the mobile device (101A-C) uses the method of Fig. 3 in order to test different chargers and not only sockets (102A-C). Thus, in general the terms such as socket (102A-C) as well as a charger are in general referred to as power supply devices.

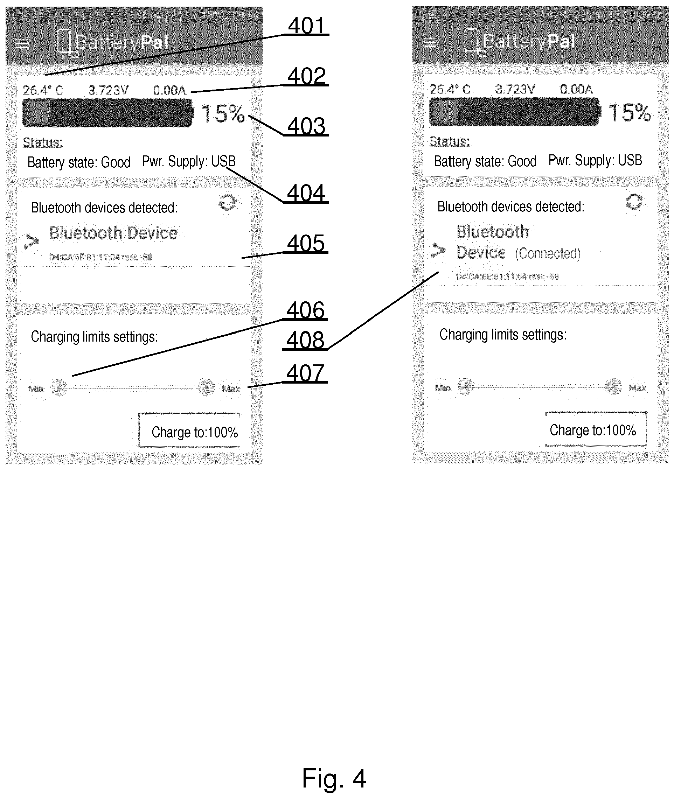

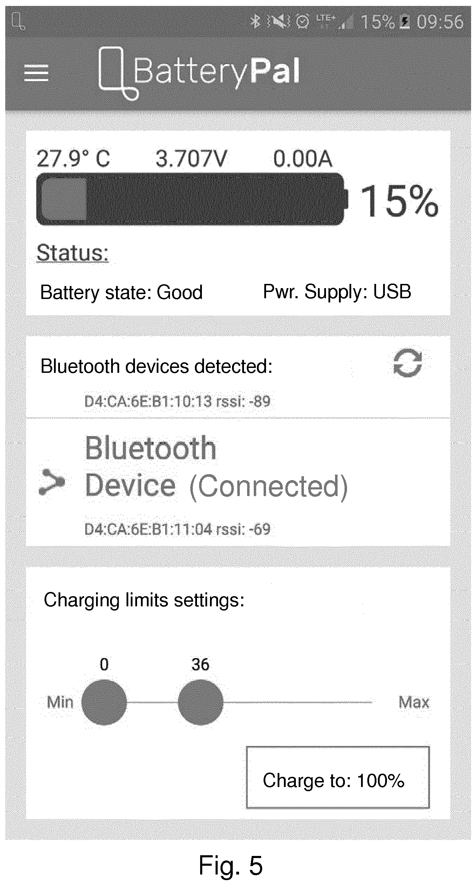

Figs. 4 and 5 present examples of a graphical user interface on a mobile device. The graphical user interface may present a state of an electronic device and a state of its battery. For example an element (401) may present a temperature of the battery while an element (402) may indicate parameters of the battery current. An element (403) may indicate a state of the battery charge and an element (404) may indicate a type of power supply (in case of Fig. 4 it is a USB). Additionally, an element (405) may indicate information concerning detected Bluetooth devices (for example it may be sockets according to the presented disclosure). While performing a proper pairing, the element may inform about a connection and present information concerning a paired socket (408).

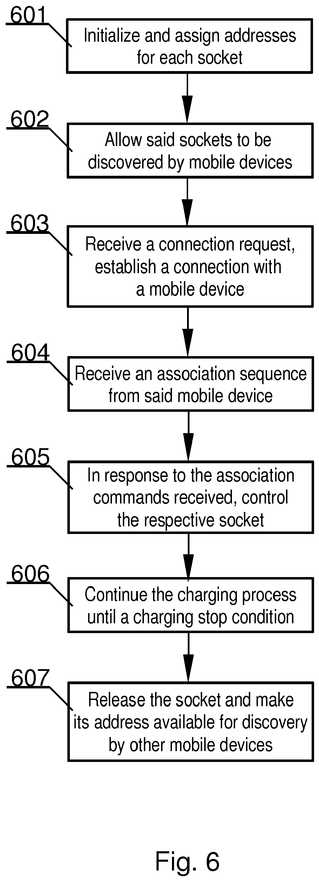

A last element of the graphical user interface may be a set of controls for setting a lower level (406) above which the charging is to be active and an upper level (407), up to which the charging is to be active. Fig. 5 presents a situation when a user indicated 0% as the lower level and 36% as the upper level (407). More information concerning the levels will be presented with accordance to Fig. 6.

Fig. 6 presents a diagram depicting operation of the power strip device (100). The device operates according to the method starting in step (601) from initializing the system presented in Fig. 1. The initializing may comprise actions known in the state of the art such as setting up hardware components, supplying the power strip with power and initiating operation of said wireless communication module (104). The initialization also comprises assigning addresses for each socket (102A-C) (alternatively these addresses may be assigned permanently to the appropriate sockets (102A-C)), that may be provided during said sockets (102A-C) discovery by respective mobile devices (101A-C). To this end each socket (102A-C) is discoverable as a separate device that may be addressed.

Next, the device allows discovery (602) of said socket (102A-C) by the mobile device (101A-C). At this stage the power strip (100) awaits for requests for connection(s) from the mobile devices (101A-C).

Next, in step (603), a request for connection is received from a mobile device (101A-C) and appropriately processed in order to establish connection to said socket (102A-C). When such connection is established, it means that a given socket (102A-C) is provisionally associated with the connected mobile device (101A-C). At this time, the power strip may temporarily disallow discovery of said provisionally associated socket (102A-C) by other mobile devices (101A-C). This allows to apply only one-to-one connections where a single socket (102A-C) may be controlled by only a single mobile device at a given time.

Next, in step (604) the power strip (100) awaits for and receives an association sequence from the connected mobile device (101A-C). This association process requires the selective series of power supply on/off cycles as explained with reference to Fig. 2 (said pattern test). To this end, the power strip (100) may receive a single batch command requesting an application of such an association sequence to a given socket (102A-C) or receive a plurality of requests from the mobile device (101A-C) at arbitrary times (e.g. the mobile device (101A-C) sends said on/off commands to the controller (103) in order to control a particular socket (102A-C) and awaits a single on/off response after each command).

For example, the batch command may include a list of: off (5s), on (3s), off (3s), on. In such a case the power strip (100) will use its own timer to control the process. Alternatively, the mobile device (101A-C) may just provide a sequence of commands using its own clock as a reference. In the second approach, a special command may be used to let the power strip (100) be informed when the association sequence ends.

In response to the received association commands, the power strip (100) controls the respective socket (605).

When the association is successful, the process moves to step (606) and continues the charging process until a charging stop condition. This condition typically means a disconnection of the wireless device from the wireless communication (104) or disconnection of the device from the respective socket.

Physical disconnection of the mobile device (101A-C) from the respective socket (102A-C) may be also optionally detected by a presence sensor detecting a plug in the socket, for example by means of a proximity sensor or similar. A state of such sensor may be transmitted to the controller (103).

In other words, the definition concerning a predefined charging condition similar to the definition from step (307) (or other predefined charging condition) may be applied herein.

The charging stop condition refers to finalization of charging, however during charging, the mobile device (101A-C) may request the power strip (100) controller (103) to temporarily pause charging and later to resume charging. Such pause is not considered as stopping the charging. For example, a charging pause may be requested by the mobile device (101A-C) when the battery charge level reaches a given upper level, for example 55%, while a charging resume action may be requested by the mobile device (101A-C) when the battery charge level decreases below or to a given lower level, for example 45%. The system remains paired during such charging pause. Additionally, there may be executed iterative charging and pause-charging cycles while the given mobile device (101A-C) remains paired and associated with the given socket (102A-C).

Although, during the charging pause, the mobile device (101A-C) is not powered from the paired socket (102A-C), the generally defined charging process according to the disclosure is still operating, until the stop charging condition is detected.

When the condition of stop charging in step (606) is met, the power strip (100) releases (607) the socket and makes its address available for discovery by other mobile devices (101A-C).

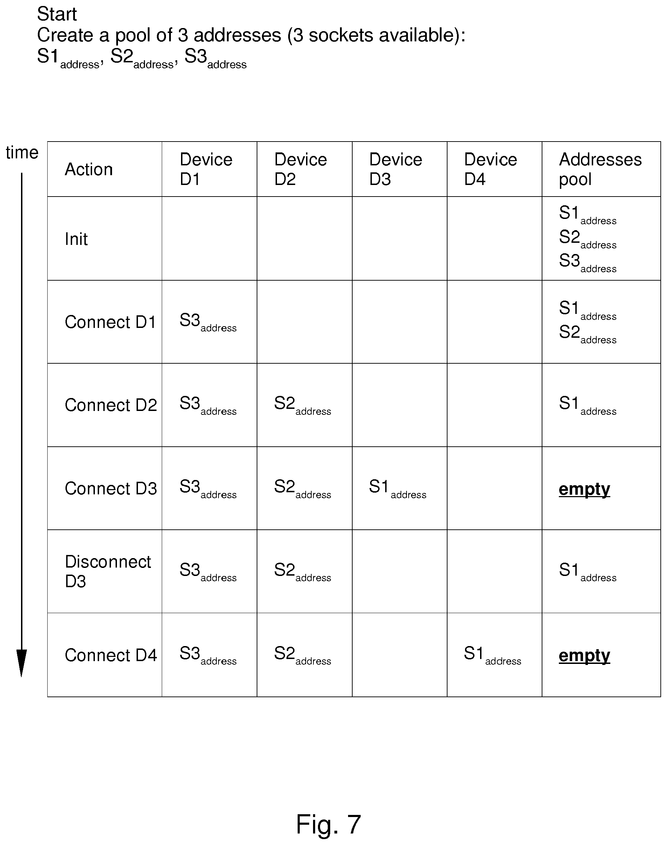

Fig. 7 shows devices addressing using a given address pool. For the purpose of this example it is assumed that 3 sockets (102A-C) are available and a user has 4 mobile devices (101A-C).

To this end, after initialization, the power strip (100) creates a pool of 3 addresses associated unambiguously with 3 sockets (102A-C). These are namely S1_{address}, S2_{address}, S3_{address}. Typically these addresses are MAC addresses but other addressing schemes may be employed depending on the type of the applied wireless communication (104).

The table shows addresses association process with respect to 4 mobile devices (101A-C). As actions take place over time, the pool of available addresses changes, which has been depicted in Fig. 7.

As an optional element, the system according to the disclosure comprises a timer (clock) and it constantly estimates, for example in the controller (103), how much time is left for reaching the upper charging level (information concerning the level may be transmitted to the power strip (100) after association of the given socket (102A-C) to the mobile device (101A-C)).

If the wireless connection disappears and simultaneously the interruption of the power consumption did not appear, it means, that the user switched off the mobile device (101A-C) but it remained connected in a warm phase - the charging phase. In such case, a stop of power supply to the socket (102A-C) associated with the device may be temporarily postponed, even though the stop charging condition was met (the disconnection of the wireless communication with the given mobile device (101A-C)).

In that case the power strip (100) may utilize the estimation timer, which with some approximation defines when to stop charging the mobile device (101A-C) which is disconnected from the wireless communication but still connected to the power strip (100). The effect of such operation is the charging being stopped in a region of the upper charging level despite lack of the wireless communication with the mobile device (101A-C).

In such scenario, the charging process will not be restarted until the mobile device (101A-C) is paired in the given socket (102A-C). When other mobile devices (101A-C) are being connected to the power strip (100), then the switched off mobile device (101A-C) is still occupying this socket. Therefore, this does not cause a problem in the system, because this socket (102A-C) is constantly involved in pairing procedures and the pattern testing of the occupied, only by the plug which is disconnected from the power source, socket (102A-C) the predefined method is performed which will cause lack of pairing.

In such scenario after switching on the mobile device (101A-C) it establishes a wireless connection with the power strip (100) and will conduct pairing and the pattern test until it pairs with its socket (102A-C) to which it is still connected.

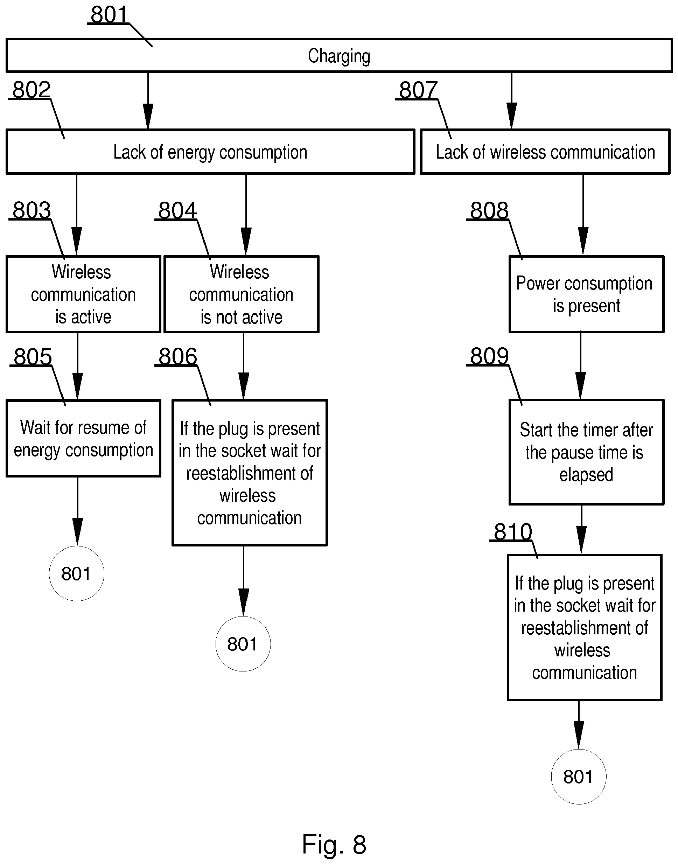

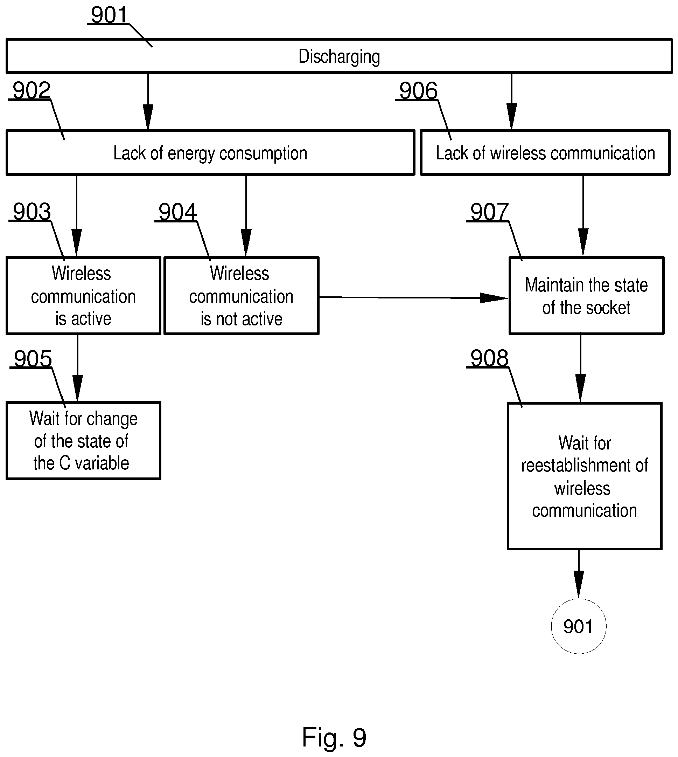

Below are presented two examples of system operation according to the present disclosure for the scenario of disconnection during charging (Fig. 8) and disconnection during discharging (Fig. 9). The embodiments include the following assumptions, which were described in detail in previous part of the description:
- Power supply presence (e.g. 220V) at a socket output = current state of a Z variable; states 0/1, wherein 0 indicates lack of power while 1 indicates presence of the power;
- Wireless communication (the system is paired) = current state of an R variable; states 0/1, wherein 0 indicates lack of paring, while 1 indicates that there is pairing;
- A cycle identifier = current state of a C variable; states 0/1; wherein 0 indicates a discharging cycle, while 1 indicates a charging cycle;
- Power consumption by the electronic device (101A-C) = current state of E variable; states 0/1, wherein 0 indicates lack of power consumption from the socket, while 1 indicates presence of the power consumption from the socket;
- Maintaining the state of pairing forced by the application = current state of P variable; states 0/1; wherein 0 indicates that all paired sockets are being released (unparing), while 1 indicates the pairing state is maintained. The 1 state is only possible after successful pairing (the variable R=1);
- Reaching a given limiter does not cause unpairing, but only stopping of current supply to the electronic device (101A-C) as presented in the previous part of the description;
- Default state (after unboxing and connecting to a socket); at least one socket of the power strip shares its address and provides current always when it is not paired and visible = "default charging";
- An electronic device (101A-C) software receives the visible addresses of the sockets and begins keying until it is paired;
- After pairing, the given address is no longer visible (for example the socket removes this address from the list of public addresses) and the operation of the system begins, it means the software controls switching on and off of the energy to a power supply depending on the preset values min/max = modes of operation;
- Until the socket is paired with the software, i.e. until the connectivity is maintained - the socket address is not released as public and the system is constantly paired (the variable R=1);
- The elements of the black and white list are operating as presented before.

When the wireless communication is interrupted, two schemes of operation may be conducted, which comprise situations of wireless communication (104) interruptions and suggested behaviors.

### OPERATING EXAMPLE 1 (disconnecting in the charging cycle (i.e. charging and waiting for a battery level to reach a predefined value (the upper limit)))

Scenario #1.1: During the charging cycle (801) the user unplugs the electronic device (101A-C) from the power supply (802) (the variable E = 0), which means that the wireless communication between the software of the electronic device (101A-C) and the paired socket is maintained (803) (for example it means that pairing is correct and the system wants to charge the battery and to aim to reach the upper level of charging) but the current is not flowing, because the plug of the electronic device (101A-C) is unplugged from the electronic device (101A-C). The wireless communication is maintained, so the socket does not release the address (does not cause it to be visible and maintains the paired state with the software of the electronic device (101A-C)). The software does not take actions apart from monitoring the state of battery charge (control of the variable C). In this state, the software gives only alerts, when the battery charge reaches the lower level (406), which is preset in the software. After reconnection of the electronic device (101A-C) the system begins to charge naturally and the software will stop the charging after reaching the upper level (407).

Scenario #1.2 During the charging cycle (801) the user unplugs (802) the electronic device (101A-C) from the power source, i.e. the scenario is analogous to the scenario 1.1, with a difference that, (804) the user in the next step moves away with the electronic device (101A-C) beyond the range of the wireless communication (104) or switches off the electronic device (101A-C) (the variable R changes the state to 0). Then the system does not release the address of the socket and awaits (806) the paired address of the electronic device (101A-C) to appear, in order to establish the wireless communication with it and to continue the charging (801). The system releases the address of the socket to the pull of addresses after the plug is unplugged from the socket or when the unpairing is forced by the software, for example turning off the software which forces unpairing and the socket releases its address to the general pull of addresses.

Scenario #1.3 During the cycle of charging the user closes/puts the electronic device (101A-C) into a sleep mode which means lack of wireless communication (807) between the software and the socket, while the power consumption by the electronic device (101A-C) is still present (808), but the socket does not have the wireless communication with the paired software. Then the timer is started, for example 10min. After this period of time the socket cuts the power off (809). The address of the socket does not return to the public list, because the socket awaits for the reestablishment of the wireless communication (810) and the communication with the software in order to resume the nominal system operation. The given socket in the power strip detects that the power consumption is still present, but the wireless communication with the paired device is terminated.

Alternatively, the address of the socket remains invisible up to the moment when the plug is unplugged from the socket. Then the program is reset and after subsequent plugging in the plug to the socket the default charging is started and the address of the socket is visible and available for pairing.

### OPERATING EXAMPLE 2 (disconnecting in the discharging cycle (i.e. lack of charging and waiting for a battery level to reach a predefined value (the lower limit)))

Scenario #2.1: During the discharging cycle (901) the user unplugs (902) the electronic device (101A-C) from the power supply. The wireless communication between the software and the socket is maintained (903). In this case, when the wireless communication is maintained (the system is paired), the system will be notified only when the software changes the state of the variable C (905) into 1 (which indicates the charging cycle) and the current will not flow due to the power supply being unplugged (902).

Scenario #2.2: During the cycle of discharging the user closes/puts the electronic device (101A-C) into a sleep mode which means lack of wireless communication (906) between the software and the socket. Then the socket maintains its state (907) and will not start charging until it reestablishes the connectivity (908) with the paired device or when the power strip is disconnected from the power supply which forces its reset and a default charging state on each socket.

Scenario #2.3 During the discharging cycle (901) the user unplugs the electronic device (101A-C) from the power supply and moves away so far that the wireless communication between the software and the socket disappears (904). The scenario 2#2 above is performed.

The present invention allows to control a general purpose power strip by means of an associated device. This is beneficial as different devices may require different charging scenarios. Therefore, the invention provides a useful, concrete and tangible result.

Since the invention applies to power strips as well as mobile devices in order to efficiently control charging process, the machine or transformation test is fulfilled and that the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for operating a power strip may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according to the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for charging a battery powered electronic device (101A-C), the method comprising the steps of detecting that the battery powered electronic device (101A-C) is being charged (301); wherein the method is **characterized in that** it comprises the steps of:
- when the battery powered electronic device (101A-C) is being charged (301), obtaining a first list of addresses (302) comprising references to sockets (102A-C) that have already been verified by the battery powered electronic device (101A-C);
- obtaining (303) a second list of available addresses of sockets (102A-C) ready for connection using said a wireless communication (104);
- removing (304) addresses of the first list (302) from the addresses of the second list (303) in order to obtain a list of candidate addresses for connection;
- selecting (306) a candidate address, from the second list, and connecting to the respective socket (102A-C) in order to execute an association process between the connected socket (102A-C) and the battery powered electronic device (101A-C) wherein a decision on association is made based on observing a response of the connected socket (102A-C) to a pattern test requesting certain behavior of the connected socket (102A-C) being verifiable by the battery powered electronic device (101A-C);
- when said response, that matches said pattern test, is detected, continuing charging the battery powered electronic device (101A-C) until a predefined charging condition is met (307).

2. The method according to claim 1, **characterized in that** it further comprises executing (305) sorting of the list of candidate addresses for connections according to wireless signal parameters.

3. The method according to claim 1 **characterized in that** said wireless signal parameters are selected from a group comprising: a signal to noise ratio, a bit error rate.

4. The method according to claim 1 **characterized in that** said pattern test comprises a selective series of power supply on/off cycles.

5. The method according to claim 1 **characterized in that** said predefined charging condition is charging pause or charging stop.

6. The method according to claim 1 **characterized in that** when said response, that matches said pattern test, is not detected:
- disconnecting (309) from the current candidate address;
- adding (301) the current candidate address to the first list; and
- returning to the step of obtaining a first list of addresses (302).

7. A computer program comprising program code means for performing all the steps of the computer-implemented method according to claim 1 when said program is run on a computer.

8. A computer readable medium storing computer-executable instructions performing all the steps of the computer-implemented method according to claim 1 when executed on a computer.

9. A method of operation of a power strip (100) configured to charge a battery powered electronic device (101A-C), the method being **characterized by**:
- assigning (601) a wireless communication address (104) to each socket (102A-C) of the power strip;
- allowing discovery (602) of said socket (102A-C) by the electronic device (101A-C) and waiting for a request for connection from the electronic device (101A-C) to said socket;
- receiving (603) the request for connection from the electronic device (101A-C) to said socket and establishing the connection;
- waiting (604) for and receiving an association sequence from said connected mobile device (101A-C) for the respective socket (102A-C);
- in response to the received association sequence, controlling (605) the respective socket (102A-C);
- when the association is successful, continuing the charging process until a predefined charging stop condition.

10. The method according to claim 9, **characterized in that** the establishment of connection means that the respective socket (102A-C) is temporarily associated to the connected electronic device (101A-C) and the power strip (100) temporarily disallows discovery of said provisionally associated socket (102A-C) by other mobile devices (101A-C).

11. The method according to claim 9 **characterized in that** the predefined charging condition is charging pause or charging stop.

12. The method according to claim 9 **characterized by** further checking if the condition in the stop charging step is fulfilled and if so, releasing (607) the address of this socket (102A-C) and making its address available for discovery by other mobile devices (101A-C).

13. A power strip (100) comprising:
- at least one socket (102A-C) selectively powered by electric energy from a power source (106);
- memory (105) for storing operational data as well as configuration data of the power strip (100);
- a controller (103) configured to control power supply as well as to control wireless communication (104) with at least one electronic device (101A-C);
**characterized in that**
- the controller (103) is configured to perform all the steps of the method according to claim 9.

14. A system for charging a battery power electronic device (101A-C) **characterized in that** it comprises:
- at least one electronic device (101A-C) configured to perform all the steps of the method according to claim 1;
- at least one power strip (100) according to claim 13.
